# EUROPEAN PATENT APPLICATION

(11) **EP 3 617 414 A1**
(43) Date of publication of application: **04.03.2020**
(21) Application number: 19151367.0
(22) Date of filing: 11.01.2019
(51) Int. Cl.: E03F 9/00, E03C 1/302, B08B 9/043, B08B 9/045, F16L 55/40, E21B 37/02, B24B 5/40

(54) **BLADE BIT OF A PIPE CLEANING OR OPENING DEVICE**

(30) Priority: 03.09.2018 FI 20184156 U
(71) Applicant: Boldan Oy, 05200 Rajamäki (FI)
(72) Inventor: KIPPO, Kim, 00750 Helsinki (FI)
(74) Representative: Berggren Oy, Helsinki & Oulu

(57) **Abstract**

The invention relates to a blade bit (15) of a pipe cleaning or opening device (21) comprising a working part (18) and a fastening part (16), that the working side of the working part (18) of the blade bit (15) has saw edged form (17), which has at least two, substantially sharp protrusions (20), which are substantially V-shaped.

## Description

The invention relates to a pipe cleaning or opening device and more particularly the invention relates to a blade bit of a pipe cleaning or opening device according to the preamble part of the independent claim.

It is known from prior art, that in maintenance and repair work of drain or sewer pipes, as well as in coating inner surfaces of drain or sewer pipes and installing lining on inner surface of a drain or sewer pipe, one important factor of work is to clean the inner surface of the drain or sewer pipe to remove material impurities, such as rust, grease, lime, soil and scale.

The removal of impurities has been done by using a pipe cleaning or opening device, which comprises a tool, for example steel chains attached to a rotatable arm or cable or wire or like, so called grinding chain and cyclone chain tools. The chains have been rotated inside the drain or sewer pipe such that at least part of the chain contacts the inner surface of the drain or sewer pipe and thus impurities are detached and removed from the inner surface and drained off the drain or sewer pipe by help of liquid, typically water, flow. The chains are rotated by a motor or corresponding means. By this the inner cleaning of the drain or sewer pipes has been provided by rotating the tool by means of a wire or like inside the pipe. The tool of the pipe cleaning or opening tool, or chain or chains is/are formed of loops connected to each other such as known from common chain structures, for example from snow or lifting chains.

It is known from prior art, that in maintenance and repair work of drain or sewer pipes, as well as in coating inner surfaces of drain or sewer pipes and installing lining on inner surface of a drain or a sewer pipe one important factor of work is also to open a lined branch by a drilling or grinding device. Different opening drills are also known from prior art, by help of which opening drills connections of pipes can be opened. Additionally, different drills with turning blade head are known from prior art.

One problem has been that blade bits of the pipe cleaning or pipe opening devices have not been sharp enough and they have had limited life time. One problem of the blades of the pipe cleaning or pipe opening devices have not been effective enough for all cleaning and opening purposes.

An object of the invention is to provide an improved blade bit of a pipe cleaning or opening device, in which the problems and disadvantages of pipe cleaning and opening devices known from prior art are eliminated or at least minimized.

An object of the invention is to create a blade bit of a pipe cleaning or opening device, which is effective and has a long lifetime.

In order to achieve the above mentioned and later indicated objects the pipe cleaning or opening device is mainly characterized by that which is defined in the characterizing part of the independent pipe cleaning or opening device claim. Advantageous additional features have been defined in the dependent claims.

The blade bit of a pipe cleaning of pipe opening device according to the invention comprises a working part and a fastening part, working side of the working part of the blade bit has saw edged form, which has at least two substantially sharp protrusions, which are substantially V-shaped.

According to an additional feature of the invention the working part and the fastening part of the blade bit are of same body.

According to an additional feature of the invention angle of the V-shape of the saw edged form of the blade bit is acute.

According to an additional feature of the invention the blade bit has thickness and the thickness is 2 -10 mm.

According to an additional feature of the invention the V-shape of the sharp protrusion of the saw edged form of the blade bit extends in the thickness direction of the blade bit substantially uniform.

According to an additional feature of the invention the blade bit is of hard metal, which has hardness of at least 300 HB.

According to an additional feature of the invention the blade bit is fastened to the pipe cleaning or opening device.

According to an additional feature of the invention the pipe cleaning or pipe opening device is a grinding chain and cyclone chain tool or a drilling or grinding device for opening a lined branch.

By the working side of the blade bit according to the invention is meant that side of the blade bit, which in use of the pipe cleaning device is meant to contact the inner surface of the pipe to be cleaned or which in use of the pipe opening device is meant to contact the material covering the branch opening to be opened/removed and that is opposite to the side of the blade bit of which the blade bit is fastened to the cleaning or opening device.

The invention can be used in cleaning and opening of drain and sewer pipes of various different types and different diameters. By the invention several advantages are achieved. The blade of a pipe cleaning or opening device provides for efficient cleaning and opening due to the saw edged form of the blade surface of the blade bit enhancing the cleaning. Additionally, the material of the blade bits provides good durability and thus long lifetime. Additionally, the blade bits are rapidly replaceable, when needed.

In the following the invention is described in more detail with reference to the accompanying figures of the drawing, in which
in figure 1 is schematically shown an example of a pipe cleaning or opening device in accordance with the invention,
in figures 2A - 2D is schematically shown some examples of a blade bit in accordance with the invention,
in figures 3A - 3E is schematically shown some examples of utilization applications of a blade bit in accordance with the invention in connection with a drilling or grinding device application for opening a lined branch,
in figures 4A - 4B is schematically shown yet some examples of utilization applications of a blade bit in accordance with the invention in connection with a drilling or grinding device application for opening a lined branch, and
in figures 5A - 5E is schematically shown yet some additional examples of utilization applications of a blade bit in accordance with the invention in connection with a drilling or grinding device application for opening a lined branch.

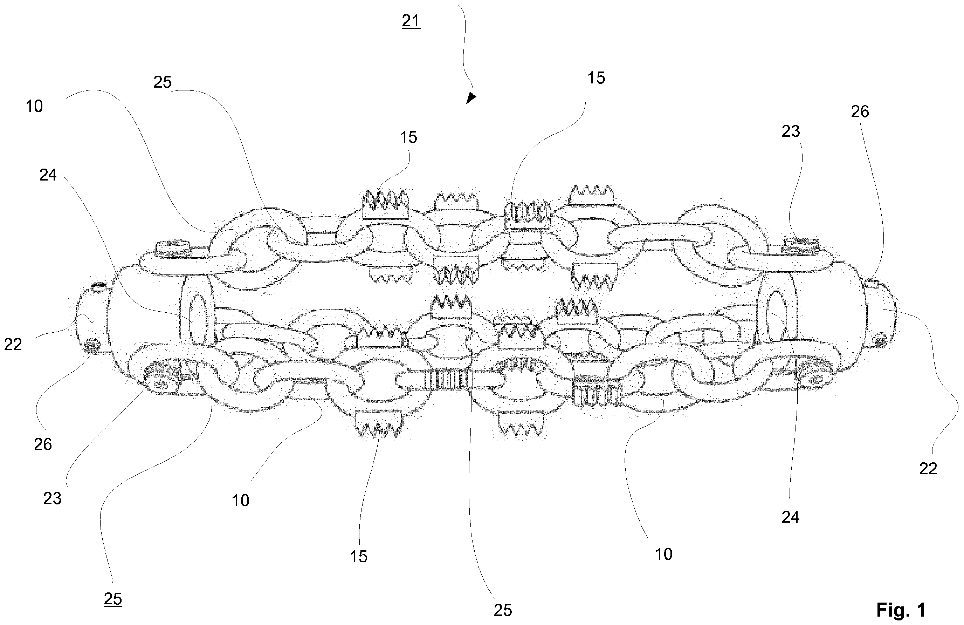

In the following description in respect of figures 1 - 5E by corresponding reference numerals and signs has been indicated corresponding elements, part and part assemblies unless otherwise mentioned. In some figures some repetitive reference markings might have been omitted for clarity.

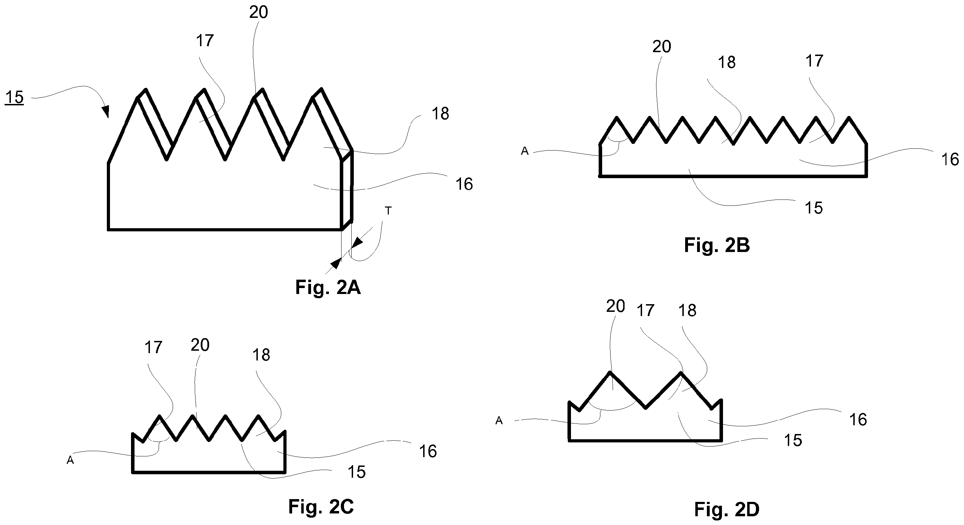

In figure 1 is schematically shown a simplified example of a pipe cleaning device 21, which comprises one or more chains 25 formed of chain loops 10. In the example of figure 1 the pipe cleaning or opening device comprises three chains 25. The pipe cleaning or opening device 21 comprises at least one chain 25, advantageously 1 - 6 chains. The pipe cleaning or opening device also comprises two end parts 22 between of which the chains 25 extend and to which each chain is respectively at its end fastened, for example by welding or by screw fastening by screws 23. In the example of figure 1 the ends of the chains 25 are fastened at each last chain loop 10, respectively to end parts 22 by screws 23. The end parts 22 comprise a central opening 24, through which a rotatable wire or a rotatable arm or a rotatable cable or a corresponding rotatable element 27 extends. The end parts 22 also comprise at least one screw 26, advantageously a friction screw, which extends to the central opening for fastening the end part 22 at a desired location on the rotatable element 27 such that the end parts 22 are at desired distance from each other on the rotatable element 27 and the end parts 22 are fastened on the rotatable element 27 non-rotatably. At least one loop of at least one chain 25 is provided with a blade bit 15, which has a saw edged form 17 having cleaning side i.e. working part 18 (figures 2A-2D). The saw edged form 17 comprises at least two sharp protrusions, in the example shown in the figure four sharp protrusions, that are advantageously V-shaped. The blade bit 15 is fastened to the chain loop 10 of the pipe cleaning device 21 for example by welding or soldering or by other applicable fastening method, advantageously on the longitudinal side of the chain loop 10, by the opposite side to the cleaning side. Advantageously, each chain comprises several blade bits 15 and advantageously, on each longitudinal side of the chain loop 10 is fastened a blade bit 15.

In figures 2A - 2D is schematically shown some examples of a blade bit 15 in accordance with the invention, which blade bit has a saw edged formed working (cleaning/opening) side, which forms the working part 18 of the blade bit 15. The working part 18 of the blade bit 15 comprises the saw edged form 17, which has at least two substantially sharp protrusions 20, which are advantageously V-shaped, reversely V-shaped when the blade bit 15 is at its place in the pipe cleaning or opening device. The opposite side of the working side of the blade bit 15 is to support the structure and a fastening part 18 with substantially rectangular form for fastening the blade bit 15 to the pipe cleaning or opening device. The blade bit 15 has a thickness T, which is advantageously 2 - 10 mm. The advantageously sharp V-shape of the sharp protrusions of the saw edged form extends substantially uniform in direction of the thickness T and the tip of the V-shape is towards the surface to be cleaned or opened and in contact with it, when the pipe cleaning or opening device is in use. The blade bits 15 are of hard material, advantageously of hard metal and the hardness of the hard material is at least 300 HB. The angle of the V-shape is advantageously a sharp angle A. The working part 18 and the fastening part 16 are advantageously of same body. The protrusions 20 of the working part 18 of the blade bit 15 are advantageously similar to each other but they can also bee different from each other. In figure 2A is shown a schematical three-dimensional example of a blade bit 15, in working part 18 of which there is four protrusions 20. In figure 2B is shown a schematical example of a blade bit 15, in working part 18 of which there is eight protrusions 20. In figure 2C is shown a schematical example of a blade bit 15, in working part 18 of which there is four protrusions 20 and in which the fastening part 16 is extended over the area covered by the protrusion 20, in this figure as small sharp protrusions in the area of the working part 18 but the extensions of the fastening part 16 can also be of other shape, for example planar.

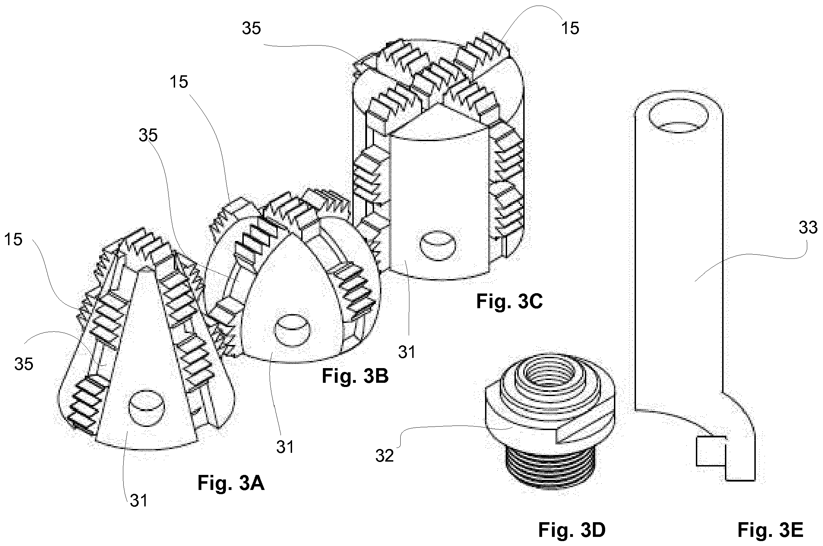

In figures 3A - 3E is schematically shown some examples of utilization applications of a blade bit 15 in connection with a drilling or grinding device application for opening a lined branch. One or advantageously more blade bits 15 are fastened to a blade head 31, advantageously to fastenings groove or grooves 35 of the blade head for example by a fastening form or a fastening fitting. In figures 3A - 3C is shown some alternatives of blade heads, in which the form of the blade heads is different, and each comprises several blade bits 15. In figure 3A is shown a conical blade head 31, in figure 3B a semi-spherical blade head 31 and in figure 3C a cylindrical blade head 31. The blade heads 31 shown in figures 3A-3C are in respect of the longitudinal axis rotationally symmetrical and each comprises four fastening grooves, which extend on the side surface and the end surface of the blade head 31. The blade head 31 is fastened for example by a fastening means 32 in accordance with figure 3D for example to a frame arm 33 in accordance with figure 3E.

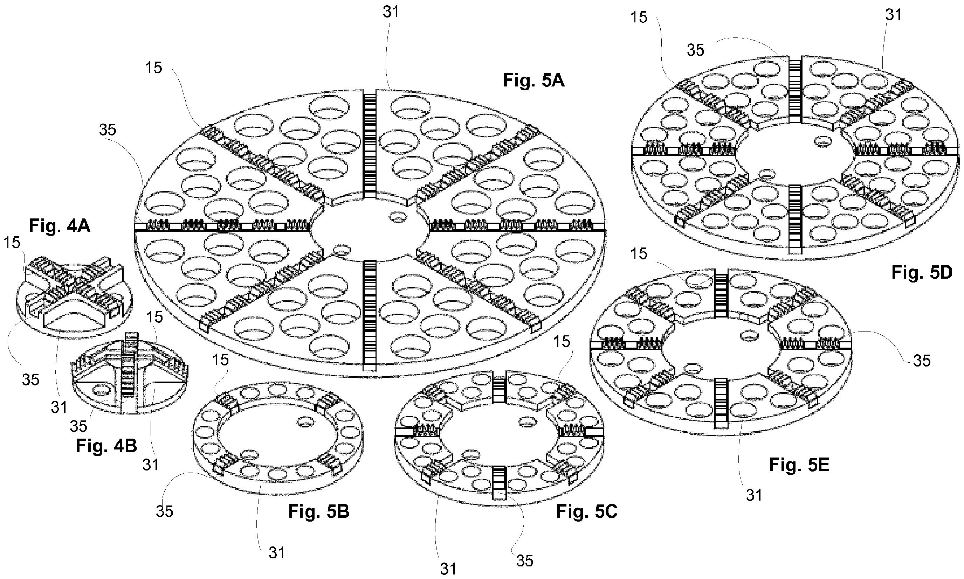

In figures 4A - 4B is schematically shown yet some examples of utilization applications of a blade bit 15 in connection with a drilling or grinding device application for opening a lined branch. One or advantageously more blade bits 15 are fastened to a blade head 31, advantageously to fastenings groove or grooves 35 of the blade head. In figures 4A - 4B is shown some alternatives of blade heads, in which the form of the blade heads is different, and each comprises several blade bits 15. In figure 4A is shown a disk-like blade head 31 and in figure 4B a conical blade head 31. Different shapes of the blade heads 31 are used in different applications. The blade heads 31 shown in figures 4A-4B are in respect of the longitudinal axis rotationally symmetrical and each comprises four fastening grooves, which extend on the end surface of the blade head 31 in figure 4A and in figure 4B on the side surface and on the end surface.

In figures 5A - 5E is schematically shown yet some examples of utilization applications of a blade bit 15 in connection with a drilling or grinding device application for opening a lined branch. One or advantageously more blade bits 15 are fastened to a blade head 31, advantageously to fastenings groove or grooves 35 of the blade head. In figures 5A - 5E is shown some alternatives of blade heads, in which the form of the blade heads is disk-like, and each comprises several blade bits 15. The blade heads 31 differ from each other in their size and/or in number of or length of the fastening grooves 35. Different shapes of the blade heads 31 are used in different applications. The blade heads 31 shown in figures 5A-5E are in respect of the longitudinal axis rotationally symmetrical and each comprises several fastening grooves, which extend on the end surface at least from the outer circumferential area of disk-like end surface a desired distance towards the center part.

The blade bit according to the invention is applicable in many different types of inside cleaning and opening of drain or sewer pipes by a pipe cleaning or opening device.

### Reference signs used in the drawing

10 chain loop
15 blade bit
16 fastening part
17 saw edged form
18 working part
20 protrusion
21 pipe cleaning or opening device
22 end part
23 screw
24 central opening
25 chain
26 screw
27 rotatable element
31 blade head
32 fastening means
33 frame are
35 fastening groove
A angle
T thickness

## Claims

1. Blade bit (15) of a pipe cleaning or opening device (21), **characterized in that** the blade bit (15) comprises a working part (18) and a fastening part (16), that the working side of the working part (18) of the blade bit (15) has saw edged form (17), which has at least two, substantially sharp protrusions (20), which are substantially V-shaped.

2. Blade bit according to claim 1, **characterized in that** the working part (18) and the fastening part (16) of the blade bit (15) are of same body.

3. Blade bit according to claim 1 or 2, **characterized in that** angle (A) of the V-shape of the saw edged form (17) of the blade bit (15) is acute.

4. Blade bit according to any of claims 1 - 3, **characterized in that** the blade bit (15) has thickness (T) and the thickness (T) is 2 -10 mm.

5. Blade bit according to claim 4, **characterized in that** the V-shape of the sharp protrusion (20) of the saw edged form (17) of the blade bit (15) extends in the thickness direction of the blade bit (15) substantially uniformly.

6. Blade bit according to any of claims 1 - 5, **characterized in that** the blade bit (15) is of hard metal, which has hardness of at least 300 HB.

7. Pipe cleaning or pipe opening device comprising a blade bit according to any of the previous claims.

8. Pipe cleaning or pipe opening device according to claim 7, **characterized in that** the pipe cleaning or opening device is a grinding chain or cyclone chain tool or a drilling or grinding device for opening a lined branch.

## Amended claims

### Amended claims in accordance with Rule 137(2) EPC.

1. Blade bit (15) for a pipe cleaning or opening device (21), which blade bit (15) comprises a working part (18) and a fastening part (16), **characterized in that** the working side of the working part (18) of the blade bit (15) has saw edged form (17), which saw edged form (17) has at least two, substantially sharp protrusions (20), which are substantially V-shaped, **that** the blade bit (15) has thickness (T) and the thickness (T) is 2 -10 mm and **that** the V-shape of the sharp protrusion (20) of the saw edged form (17) of the blade bit (15) extends in the thickness direction of the blade bit (15) substantially uniformly.

2. Blade bit according to claim 1, **characterized in that** the working part (18) and the fastening part (16) of the blade bit (15) are of same body.

3. Blade bit according to claim 1 or 2, **characterized in that** angle (A) of the V-shape of the saw edged form (17) of the blade bit (15) is acute.

4. Blade bit according to any of claims 1 or 3, **characterized in that** the blade bit (15) is of hard metal, which has hardness of at least 300 HB.

5. Pipe cleaning or pipe opening device comprising a blade bit according to any of the previous claims.

6. Pipe cleaning or pipe opening device according to claim 5, **characterized in that** the pipe cleaning or opening device is a grinding chain or cyclone chain tool or a drilling or grinding device for opening a lined branch.
